# DEMANDE DE BREVET EUROPEEN

(11) **EP 3 503 296 A1**
(43) Date de publication de la demande: **26.06.2019**
(21) Numéro de dépôt: 18215633.1
(22) Date de dépôt: 21.12.2018
(51) Int. Cl.: H01Q 1/44, H01Q 7/00, H01Q 7/06, H02J 7/00

(54) **MUTUALISATION D'UNE ANTENNE ET D'UN CONVERTISSEUR POUR L ALIMENTATION D'UN CIRCUIT ELECTRONIQUE**

(30) Priorité: 22.12.2017 FR 1763119
(71) Demandeur: Commissariat à l'Energie Atomique et aux Energies Alternatives, 75015 Paris (FR)
(72) Inventeur: WANDEROILD, Yohan, 38240 Meylan (FR); CAPITAINE, Armande, 38000 Grenoble (FR); MOREL, Adrien, 38000 Grenoble (FR); PILLONNET, Gaël, 38120 Proveysieux (FR)
(74) Mandataire: Priori, Enrico

(57) **Abrégé**

Un système électronique autonome comprenant deux bornes d'entrée reliées à une source d'énergie électrique externe (SE), un circuit convertisseur (Conv) comprenant au moins un élément inductif (L) et relié auxdites bornes pour recevoir l'énergie de la source (SE), un moyen de stockage (S) de l'énergie délivrée par le circuit convertisseur, un circuit électronique de traitement (T) réalisant une fonction prédéfinie et délivrant un signal de données après réalisation de ladite fonction, un circuit d'émission (E) relié à une antenne pour transmettre ledit signal de données à un récepteur (R) distant, et un circuit de contrôle (Ctrl) apte à commander lesdits circuits alimentés grâce à la source d'énergie (SE), le système étant caractérisé en ce que le circuit convertisseur et l'antenne comprennent au moins un élément inductif commun et en ce qu'il comprend un dispositif de liaison placé entre le circuit d'émission et ledit au moins élément inductif commun pour transmettre le signal émis par l'antenne constituée au moins en partie par ledit au moins élément inductif commun.

## Description

L'invention appartient au domaine des systèmes électroniques autonomes comprenant un circuit électronique destiné à transmettre régulièrement des données à un récepteur distant.

Un système électronique autonome est capable de récupérer dans son environnement l'énergie électrique dont il a besoin pour réaliser la fonction pour laquelle il est prédéfini (réaliser une mesure d'un paramètre environnemental, manifester sa présence par l'envoi d'un identifiant, etc..) et communiquer sans fil avec un récepteur distant. De tels systèmes sont par exemple utilisés dans les systèmes IOT. Le système électronique autonome peut être relié à différents types de source d'énergie électrique tirant leur énergie électrique d'une source d'énergie chimique, mécanique, solaire, thermique, etc...

De tels systèmes électroniques autonomes sont souvent reliés à une source d'énergie délivrant une faible quantité d'énergie au regard de l'énergie nécessaire au système pour réaliser sa fonction, par exemple réaliser une mesure, et par suite émettre la donnée de mesure. Ainsi, il est nécessaire d'accumuler de l'énergie dans un moyen de stockage avant d'activer les circuits électroniques de mesure et d'émission. Les circuits de mesure et d'émission sont généralement mis en mode « veille » et « réveillés » uniquement quand l'énergie stockée est suffisante pour qu'ils puissent fonctionner dans de bonnes conditions (mesures + émission).

En milieu marin, des biopiles ou piles bactériennes (« Microbial Fuel Cells » en anglais) peuvent être utilisées pour alimenter des capteurs autonomes présents au fond des mers et des océans. Ces biopiles convertissent une énergie chimique en énergie électrique grâce à une réaction d'oxydo-réduction ayant lieu entre les sédiments marins, contenant notamment des enzymes et des organismes vivants, et l'eau de mer. Cela conduit à l'apparition d'une tension aux bornes de la biopile, qui permet d'alimenter un capteur qui va recueillir des données. Ces données sont ensuite transmises, à travers le milieu marin (sans fil), à un récepteur présent à la surface et/ou sur les côtes littorales grâce à une antenne sous-marine.

Par ailleurs, du fait de la forte atténuation des ondes et de leur célérité dans l'eau, des fréquences inférieures à 30 kHz sont utilisées pour la transmission des données par l'antenne sous-marine. Une antenne de plusieurs dizaines de mètres est donc nécessaire (Zhang et al, « The impact of antenna design and frequency on underwater wireless communications », Communications, Computers and Signal Processing (PacRim), IEEE Pacific Rim Conference, 868-872, août 2011). Ces systèmes à biopiles sont donc particulièrement encombrants.

En outre, au-delà des applications marines, les composants électroniques nécessaires à la réalisation d'un système autonome peuvent s'avérer volumineux et onéreux dans certains cadres applicatifs.

L'invention vise à remédier aux inconvénients précités de l'art antérieur, plus particulièrement, elle vise à proposer un système de capteur autonome compact et moins onéreux. Ce système peut être exploité en milieu marin avec des biopiles, mais également dans un milieu quelconque avec n'importe quelle source d'énergie électrique.

Un objet de l'invention est donc un système électronique autonome comprenant deux bornes d'entrée aptes à recevoir des connexions électriques filaires reliées à une source d'énergie électrique externe, un circuit convertisseur relié aux deux bornes d'entrée pour recevoir l'énergie électrique de ladite source d'énergie électrique externe, le circuit convertisseur comprenant au moins un élément inductif, un moyen de stockage de l'énergie délivrée par le circuit convertisseur, un circuit électronique de traitement réalisant une fonction prédéfinie quand l'énergie stockée dans ledit moyen de stockage est supérieure à une valeur prédéfinie, et délivrant un signal de données après réalisation de ladite fonction, un circuit d'émission relié à une antenne pour transmettre ledit signal de données à un récepteur distant, et un circuit de contrôle apte à commander lesdits circuits ; dans lequel l'ensemble des circuits est alimenté à partir de ladite source d'énergie électrique externe et dans lequel la puissance moyenne prélevée sur la source d'énergie électrique externe est inférieure à la puissance moyenne nécessaire aux circuits électriques de traitement et d'émission pour la réalisation de ladite fonction et l'envoi des données correspondantes; le système est caractérisé en ce que ledit convertisseur et l'antenne comprennent au moins un élément inductif commun, et en ce que le système comprend un dispositif de liaison placé entre le circuit d'émission et ledit au moins un élément inductif commun pour permettre le transfert du signal à émettre par l'antenne constituée en tout ou partie par ledit au moins un élément inductif commun.

Selon des modes de réalisation particuliers de l'invention :
- Le système peut comprendre en outre un dispositif d'interruption du fonctionnement du circuit convertisseur permettant d'isoler ledit au moins un élément inductif commun et de le dédier uniquement à la réalisation d'une antenne, et dans lequel le circuit de contrôle est apte à commander le dispositif d'interruption et le dispositif de liaison pour configurer l'élément inductif commun respectivement en antenne ou en inductance pour le circuit convertisseur ;
- Le système peut recevoir de ladite source d'énergie électrique une tension sensiblement continue et le circuit convertisseur peut être de type élévateur ou abaisseur et comprendre une bobine ainsi qu'au moins un interrupteur commandé pour être alternativement passant ou non-passant selon une fréquence de hachage, et ladite bobine peut être utilisée en tout ou partie comme antenne d'émission ;
- Le dispositif de liaison peut comprendre deux interrupteurs placés chacun entre une sortie du circuit d'émission et un point de connexion dudit au moins un élément inductif commun ;
- Le circuit convertisseur et le circuit d'émission peuvent fonctionner en même temps, et la fréquence du signal d'émission peut être sensiblement différente de la fréquence interne de fonctionnement dudit circuit convertisseur ; et
- Ledit au moins un élément inductif du circuit convertisseur peut comprendre un noyau magnétique, et lors de l'utilisation dudit au moins un élément inductif commun comme antenne, le noyau magnétique est saturé par un dispositif de saturation.

Selon un autre mode de réalisation de l'invention, le circuit convertisseur peut inclure un transformateur comprenant un enroulement primaire et un enroulement secondaire, tout ou partie des enroulements primaire et secondaire constituant ladite antenne.

Dans ce mode de réalisation :
- Le circuit convertisseur peut également être de type flyback et comprendre au moins un interrupteur de commande relié à l'enroulement primaire du transformateur, l'interrupteur de commande étant commandé pour être alternativement passant ou non-passant selon une fréquence de hachage ;
- Le transformateur peut être un transformateur à air ; et
- Le système peut recevoir de ladite source d'énergie électrique une tension alternative qui est appliquée sur l'enroulement primaire du transformateur.

D'autres caractéristiques, détails et avantages de l'invention ressortiront à la lecture de la description faite en référence aux figures annexées données à titre d'exemple, et qui représentent, respectivement :
- La figure 1, un schéma illustrant le principe de l'invention ;
- La figure 2, un système d'alimentation d'un capteur selon un premier mode de réalisation de l'invention ;
- La figure 3, un système d'alimentation d'un capteur selon un second mode de réalisation de l'invention ;
- La figure 4, un système d'alimentation d'un capteur selon un troisième mode de réalisation de l'invention ;
- Les figures 5a et 5b, un élément inductif selon deux autres modes de réalisation de l'invention ;
- La figure 6, un système d'alimentation d'un capteur selon un sixième mode de réalisation de l'invention ; et
- La figure 7, un système d'alimentation d'un capteur selon un septième mode de réalisation de l'invention.

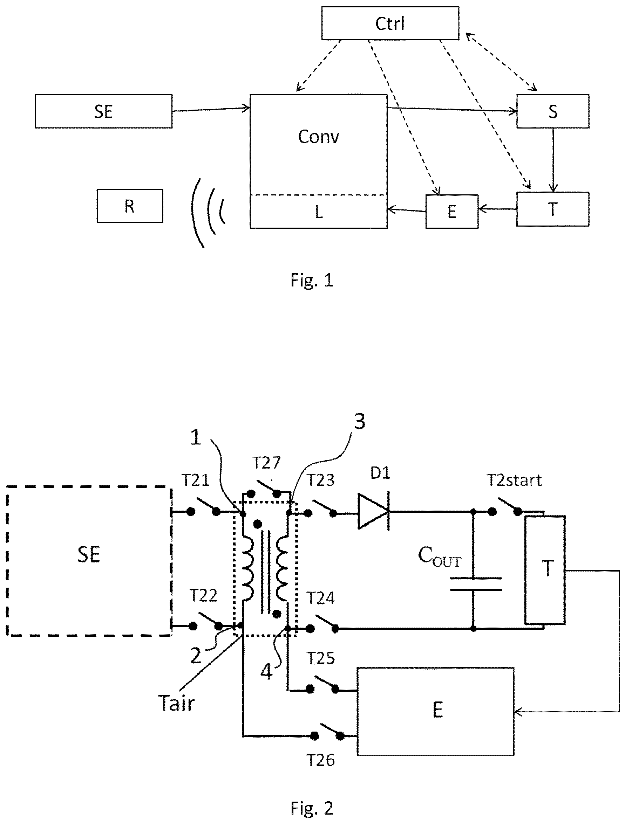

La figure 1 présente un schéma illustrant le principe de l'invention. Une source d'énergie SE produit de l'énergie électrique qui est récupérée par un convertisseur Conv qui comprend au moins un élément inductif L pour la conversion d'énergie électrique. L'énergie délivrée par le convertisseur est stockée dans un moyen de stockage S. Quand il y a suffisamment d'énergie stockée dans S, un circuit électronique de traitement T est alimenté en énergie pour réaliser une fonction prédéfinie, par exemple réaliser une mesure à l'aide de capteurs ou indiquer un identifiant. Le circuit électronique de traitement T fournit ensuite des données, par exemple des données de mesures, à un circuit d'émission E qui envoie ensuite ces données par une communication sans fil à un récepteur R. Selon un aspect de l'invention, le circuit d'émission E utilise tout ou partie de l'élément inductif L du convertisseur comme antenne pour envoyer les données. Cette mutualisation de l'élément inductif L permet ainsi de ne plus avoir d'antenne distincte des éléments inductifs présents dans le convertisseur Conv, et donc d'avoir un système électronique autonome globalement plus compact.

Le système autonome selon la présente invention peut être utilisé dans différentes applications. Selon l'application visée, et notamment la fréquence d'émission visée et la fréquence de hachage du convertisseur, l'élément dimensionnant des composants inductifs sera soit l'émission sans fil, soit le transfert d'énergie via le convertisseur. Ainsi, le choix du type de convertisseur et du type d'antenne sont fonction l'un de l'autre, l'une des composantes étant plus ou moins contrainte selon l'application envisagée.

Dans le cadre d'une application marine telle que celle présentée précédemment et relative à l'usage de biopiles pour alimenter un ensemble de capteurs sous-marins, l'élément dimensionnant est la taille de l'antenne d'émission car l'émission est réalisée à basse fréquence (inférieur à 30kHz).

Des applications terrestres nécessitant une transmission longue distance, à relativement basse fréquence pourront être réalisées en utilisant un dispositif similaire au dispositif marin susmentionné.

Pour des applications terrestres plus hautes fréquences, nous pouvons envisager des systèmes autonomes émettant dans les mégahertz (MHz), voire les gigahertz (GHz). Dans ce cas, l'élément dimensionnant sera plutôt déterminé par les éléments inductifs du convertisseur présent dans le convertisseur.

Différentes combinaisons de circuit convertisseur et de type d'antenne sont décrites ci-après, avec des sources d'énergie électrique continues ou alternatives, basse ou haute tension, avec des dispositifs d'émission présentant une fréquence d'émission proche ou très différente de la fréquence de variation des signaux aux bornes des éléments inductifs du convertisseur (fréquence de hachage ou fréquence de la tension alternative).

On notera que pour tous les systèmes électroniques autonomes selon l'invention, la puissance moyenne fournie par la source d'énergie SE est significativement plus faible que la puissance moyenne nécessaire au fonctionnement des circuits de traitement et d'émission des données correspondantes, ce qui explique pourquoi il est nécessaire d'accumuler de l'énergie dans le moyen de stockage avant d'activer ces circuits de traitement et d'émission.

La figure 2 présente un système électronique autonome selon un premier mode de réalisation de l'invention. La source d'énergie SE est par exemple une source délivrant une faible énergie, par exemple une pile microbienne délivrant environ 1V, sous la forme d'une tension sensiblement continue. Dans cet exemple, le convertisseur est de type Flyback et comprend un transformateur à air Tair, plusieurs interrupteurs T21, T22, reliés aux bornes 1 et 2 du primaire et T23 et T24 reliés aux bornes 3 et 4 du secondaire du transformateur Tair, ainsi qu'une diode D1 entre l'interrupteur T23 et la sortie du convertisseur. L'énergie électrique fournie par le convertisseur est ensuite stockée dans un condensateur C_{OUT}. Un interrupteur T2start est dans cet exemple placé entre le condensateur C_{OUT} et la borne d'alimentation du circuit de traitement T et du circuit d'émission E. Quand l'interrupteur T2start est rendu passant par le circuit de contrôle, après détection d'un niveau de charge suffisant du condensateur C_{OUT}, le circuit de traitement est alimenté et peut ainsi effectuer le traitement qu'il doit réaliser, par exemple des mesures du milieu environnant. Les données de mesures sont ensuite transmises au circuit d'émission E. Le circuit d'émission E est relié aux bobines du transformateur Tair par l'intermédiaire d'un circuit de liaison. Ce circuit de liaison comprend dans cet exemple un interrupteur T26 placé entre une première sortie du circuit d'émission E et la borne 2 du transformateur, un interrupteur T25 placé entre une deuxième sortie du circuit d'émission E et la borne 4 du transformateur, ainsi qu'un interrupteur T27 placé entre les bornes 1 et 3 du transformateur T. Le système autonome comprend en outre un circuit de contrôle non représenté qui commande les différents interrupteurs. Ce circuit de contrôle est alimenté par une alimentation spécifique, ou de préférence par un dispositif d'alimentation rechargeable qui tire son énergie de la source d'énergie.

Lors d'une phase de récupération d'énergie, les interrupteurs T21, T22, T23 et T24 du convertisseur Flyback sont commandés par le circuit de contrôle, de façon classique, et de préférence de sorte à maximiser le transfert d'énergie (point couramment dénommé MPPT). Le convertisseur Flyback va, par exemple, élever la tension de sortie de la biopile jusqu'à 2 ou 3 V. Pendant la phase de récupération d'énergie (convertisseur actif), les interrupteurs T25, T26, et surtout l'interrupteur T27 du circuit de liaison sont ouverts de façon à ne pas perturber le fonctionnement du convertisseur. La tension « élevée » délivrée par le convertisseur permet de charger le condensateur C_{OUT} à une tension permettant ensuite d'alimenter le circuit de traitement T. Lors de cette phase de traitement, l'interrupteur T2start est fermé. Avantageusement, il est possible de continuer de récupérer de l'énergie tout en alimentant le circuit de traitement T. Une fois le traitement réalisé par le circuit de traitement T, l'émission des données par le circuit d'émission E nécessite d'utiliser les éléments inductifs du transformateur pour former l'antenne d'émission. Durant cette phase d'émission, le convertisseur est interrompu, les interrupteurs T21 à T24 sont non-conducteurs, et le circuit de liaison est activé, les interrupteurs T25 à T27 étant rendus conducteurs. Les deux bobines, primaire et secondaire, du transformateur sont mises en série pour constituer l'antenne d'émission.

Avec une biopile en source d'énergie SE, la phase de récupération d'énergie permet de récupérer une puissance entre 10 µW et 100 µW pendant une durée de 1 à 10 s. Un capteur, qui constitue dans cet exemple le circuit de traitement T, est alimenté et effectue des mesures dès que l'énergie dans le condensateur C_{OUT} est de 100 µJ. La phase de mesure et d'émission dure généralement entre 1 et 10 ms. Lors de la transmission des mesures du capteur via l'émetteur E, les deux inductances du transformateur à air Tair forment alors une antenne, qui est suffisamment grande pour permettre l'envoi des mesures depuis le capteur jusqu'à un récepteur situé à proximité ou à plusieurs dizaines de kilomètres.

Selon une variante de réalisation, seul un des éléments inductifs du transformateur à air Tair est utilisé pour former l'antenne de transmission. L'interrupteur T27 est alors inutile et l'interrupteur T26 est par exemple relié à la borne 3 du transformateur, le secondaire constituant ainsi l'antenne d'émission. Selon une autre variante, on peut utiliser une partie seulement d'une bobine primaire ou secondaire, le nombre d'interrupteurs et leur positionnement étant adapté pour relier le circuit d'émission à cette partie de bobine utilisée pour former une antenne.

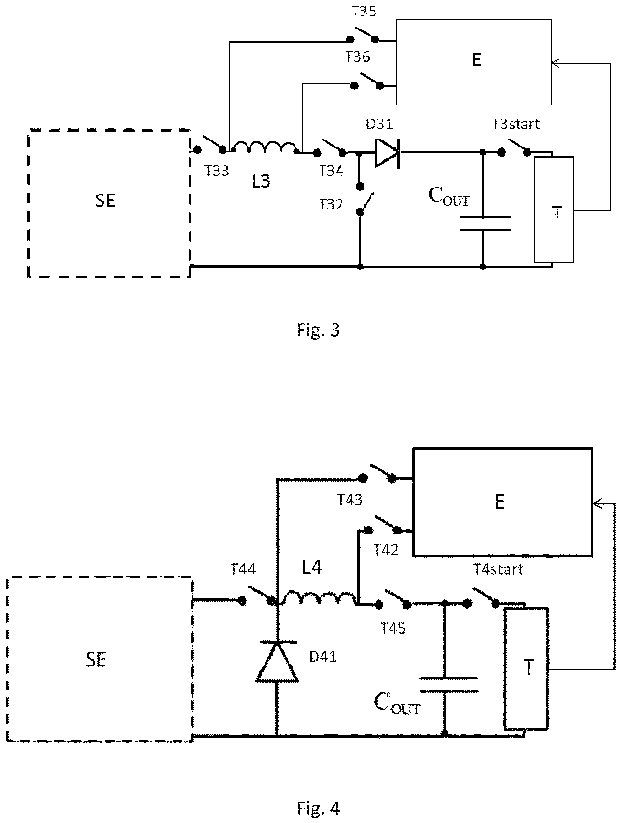

La figure 3 présente un système électronique autonome selon un autre mode de réalisation de l'invention, qui constitue en fait une variante du système décrit en figure 2. Le convertisseur est ici de type élévateur, par exemple de type Boost. Le convertisseur comprend une inductance L3, des interrupteurs T33, T34 et T32 et une diode D31. Le système comprend comme précédemment, un condensateur C_{OUT}, un interrupteur T3start, un circuit de traitement T et un circuit d'émission E. Le circuit d'émission E est relié à la bobine L3 par l'intermédiaire d'un circuit de liaison. Ce circuit de liaison comprend dans cet exemple deux interrupteurs T35 et T36 placés respectivement entre une sortie du circuit d'émission E et une borne de la bobine L3. Comme précédemment, un circuit de contrôle (non représenté) commande les différents interrupteurs.

Lors d'une phase de récupération d'énergie par le convertisseur Boost, les interrupteurs T33, T34, T32 sont commandés par le circuit de contrôle, de façon classique, et de préférence de sorte à maximiser le transfert d'énergie (point couramment dénommé MPPT). Comme précédemment, l'énergie est stockée dans le condensateur C_{OUT} et le circuit de traitement T est sollicité quand l'énergie stockée dans le condensateur C_{OUT} est suffisante pour permettre au circuit T de réaliser le traitement qu'il doit exécuter. Au moment de la transmission des données par l'émetteur E, le convertisseur est rendu inactif et le circuit de liaison est rendu actif afin que la bobine L3 soit utilisée comme antenne. Les interrupteurs T33 et T34 sont ouverts, puis les interrupteurs T35 et T36 sont fermés.

Dans l'exemple de système précédemment décrit et illustré en figure 3, les deux interrupteurs T33 et T34 placés de part et d'autre de la bobine L3 ne sont pas nécessaires pour réaliser le convertisseur, l'interrupteur T32 et la diode D31 étant les deux éléments classiques du convertisseur « boost ». Les interrupteurs T33 et T34 servent en pratique à isoler la bobine L3 respectivement de la source d'énergie SE et des autres composants du convertisseur, lors de la phase d'émission. En variante, la diode D31 et l'interrupteur T34 auraient pu être remplacés par un unique transistor placé à la place de la diode, cet unique transistor étant rendu conducteur lors de la phase de récupération d'énergie pendant les phases de transfert de l'énergie accumulée dans la bobine vers le condensateur.

La figure 4 présente un système électronique autonome selon un autre mode de réalisation de l'invention qui constitue en fait une autre variante du système décrit en figure 2. Le convertisseur est ici de type abaisseur, par exemple de type Buck. Le convertisseur comprend une bobine L4 et des interrupteurs T44 et T45 placés de part et d'autre de la bobine L4, et une diode de roue libre D41. Le système comprend comme précédemment, un condensateur C_{OUT}, un interrupteur T4start, un circuit de traitement T et un circuit d'émission E. Le circuit d'émission E est relié à la bobine L4 par l'intermédiaire d'un circuit de liaison. Ce circuit de liaison comprend dans cet exemple deux interrupteurs T42 et T43 placés respectivement entre une sortie du circuit d'émission E et une borne de la bobine L4. Comme précédemment, un circuit de contrôle (non représenté) commande les différents interrupteurs.

Lors de la récupération d'énergie par le convertisseur Buck, les interrupteurs D41, T44 et T45 sont commandés par le circuit de contrôle, de façon classique, et de préférence de sorte à maximiser le transfert d'énergie (point couramment dénommé MPPT). Comme précédemment, l'énergie est stockée dans le condensateur C_{OUT} et le circuit de traitement T est sollicité quand l'énergie stockée dans le condensateur C_{OUT} est suffisante pour permettre au circuit T de réaliser le traitement qu'il doit exécuter. Au moment de la transmission des mesures par un émetteur E, le convertisseur est rendu inactif et le circuit de liaison est rendu actif afin que la bobine L4 soit utilisée comme antenne. Les interrupteurs T44 et T45 sont ouverts, puis les interrupteurs T43 et T42 sont fermés.

Dans l'exemple de système précédemment décrit et illustré en figure 4, seul un des deux interrupteurs T44 et T45 placés de part et d'autre de la bobine L4 est en fait nécessaire pour réaliser le convertisseur Buck, l'interrupteur T44 et la diode D41 étant les deux éléments classiques du convertisseur « Buck ». Le transistor T45 sert en pratique à isoler la bobine L4 des autres composants du convertisseur, lors de la phase d'émission. Quand un transformateur à air est utilisé, il peut émettre un champ électromagnétique qui peut entrer en conflit avec les normes de compatibilité électromagnétique (CEM). En milieu marin, ce n'est généralement pas un souci. Par contre, si le système électronique autonome est utilisé dans un milieu autre que marin, cela peut être gênant, voire rédhibitoire pour son utilisation. C'est pourquoi, selon un autre mode de réalisation de l'invention, les éléments magnétiques du convertisseur comprennent un noyau magnétique pour canaliser les champs magnétiques émis et éviter les émissions non souhaitables. Par exemple, le transformateur à air est remplacé par un transformateur à noyau magnétique, ou l'inductance, présente dans les convertisseurs Boost et Buck, comprend un noyau magnétique. Le noyau magnétique permet de canaliser le champ électromagnétique émis par le transformateur ou l'inductance, et d'augmenter la valeur de l'inductance ou de l'inductance magnétisante pour un transformateur, lors de la phase de récupération d'énergie par le convertisseur. Lors de la phase d'émission, il est néanmoins nécessaire de laisser sortir le champ magnétique pour réaliser l'émission du signal à destination du récepteur distant. Le noyau magnétique est alors saturé lors de l'utilisation de l'inductance ou d'un élément inductif du transformateur en antenne.

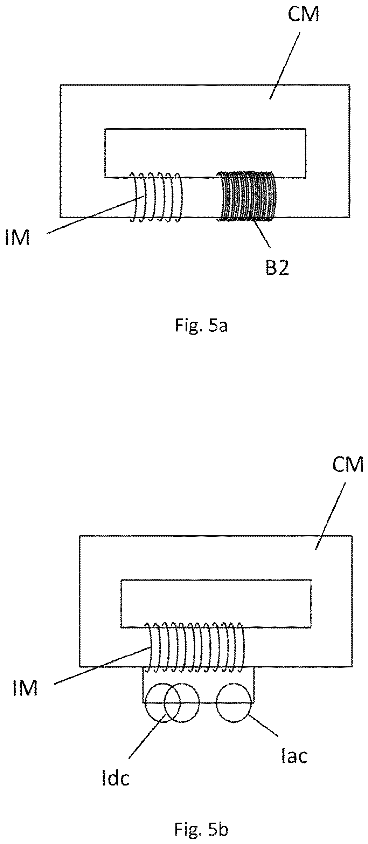

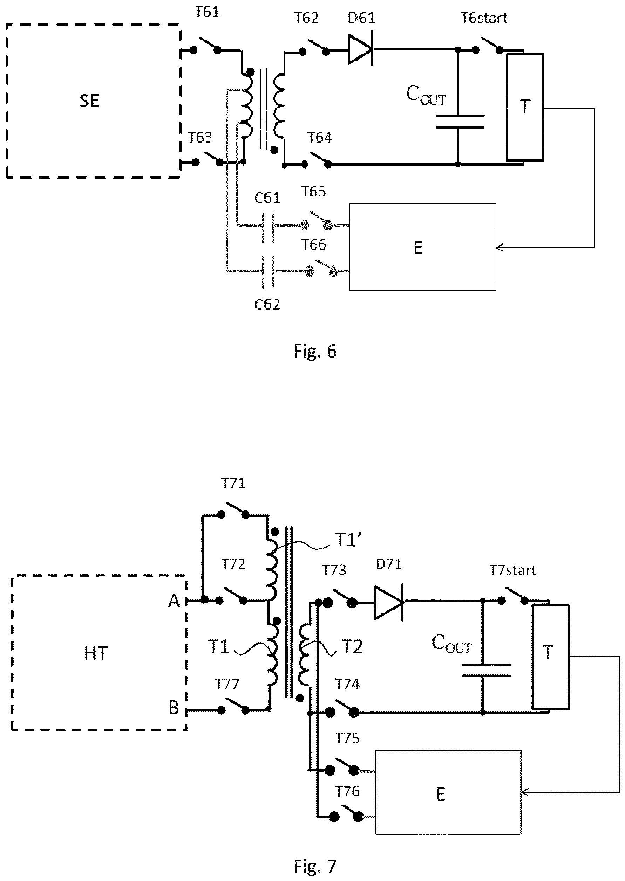

Les figure 5a et 5b illustrent toutes deux schématiquement un noyau magnétique CM et, entourée sur ce noyau, une bobine IM qui correspond à un élément inductif du convertisseur utilisé pour former l'antenne. Afin de pouvoir émettre, le système électronique comprend un moyen pour saturer le noyau magnétique et permettre ainsi le rayonnement électromagnétique car le noyau magnétique ne confine plus le champ « supplémentaire » qui dépasse le champ maximal qui peut être canalisé par le noyau magnétique. La saturation magnétique peut être obtenue par l'utilisation dans une bobine entourant le noyau magnétique d'un « fort » courant continu Idc ou d'un courant alternatif lac présentant également une « forte » valeur crête. Dans l'exemple de la figure 5a, les courants Idc ou lac sont injectés directement dans l'élément inductif IM servant d'antenne. Dans l'exemple de la figure 5b, une deuxième bobine B2, différente de celle utilisée pour former l'antenne, est placée autour du noyau CM. La bobine B2 peut être parcourue par un courant DC ou AC dans le but de saturer le noyau magnétique et de permettre l'émission d'un champ magnétique par l'autre bobine IM. On pourra par exemple utiliser le primaire d'un transformateur pour saturer le noyau et émettre avec le secondaire. Un tel courant de saturation pourra être injecté par un circuit dédié et commandé par le circuit d'émission ou le circuit de contrôle lors d'une phase d'émission. Un exemple de circuit dédié, ou circuit de saturation, comprend par exemple un condensateur Cs que l'on recharge, comme le condensateur C_{OUT}, pendant une phase de récupération d'énergie, puis qu'on décharge dans une bobine (IM ou B2) pendant la phase d'émission, cette décharge correspondant à l'injection d'un courant sensiblement DC. Un autre exemple de circuit de saturation utilisant un courant lac est décrit en relation avec la figure 7.

Dans les exemples précédemment décrits, le convertisseur est arrêté pendant la phase d'émission de données. L'élément inductif partagé par le convertisseur et l'antenne n'est pas utilisé en même temps pour la conversion d'énergie et l'émission de données. Les raisons peuvent être diverses. Dans le cas du système de la figure 2, la mise en série du primaire et du secondaire est clairement incompatible avec une utilisation du transformateur pour récupérer de l'énergie. Dans le cas des systèmes représentés en figures 3 et 4, il est potentiellement envisageable de superposer une émission et une récupération d'énergie moyennant quelques adaptations et conditions de fonctionnement du système. Ainsi, pour envisager la superposition, il faut que la fréquence des signaux d'émission et la fréquence de hachage des convertisseurs Buck ou Boost soient bien différentes pour envisager de superposer sur une même bobine une fréquence haute d'émission et une fréquence basse de hachage. En outre, pour ne pas dégrader le fonctionnement du convertisseur, il faut assurer une isolation « basse fréquence » entre la bobine L3, ou L4 et le circuit d'émission E, par exemple au moyen de condensateur de filtrage.

Des exemples de système permettant une superposition des fonctions émission/récupération d'énergie sont donnés ci-après.

La figure 6 illustre un système électronique autonome selon une variante de réalisation du système représenté en figure 2, dans laquelle le circuit de liaison est réalisé différemment. Le circuit de liaison comprend d'une part un condensateur C61 et un interrupteur T65 en série entre une première sortie du circuit d'émission et un premier point du primaire du transformateur T et d'autre part un condensateur C62 et un interrupteur T66 en série entre une deuxième sortie du circuit d'émission et un deuxième point du primaire du transformateur T. Ainsi, dans ce mode de réalisation, lors de la transmission des mesures, une partie de l'élément inductif du primaire du transformateur est utilisée comme antenne par le circuit d'émission E. La fréquence du signal de données émis par le circuit d'émission E est bien supérieure à la fréquence de fonctionnement du convertisseur (fréquence du signal AC émis par la source d'énergie et reçu par le transformateur) et les deux condensateurs C61 et C62 permettent de filtrer le signal « basse fréquence » traversant le transformateur.

Dans les exemples précédemment décrits, la source d'énergie délivre une tension sensiblement continue. La présente invention peut également être mise en oeuvre avec une source de tension alternative. Un exemple de système électrique autonome utilisant une source de tension alternative est donné ci-après.

La figure 7 illustre un système électronique autonome selon un autre mode de réalisation de l'invention dans lequel la source d'énergie est par exemple un réseau alternatif haute tension HT. Le système comprend un convertisseur incluant un transformateur comprenant deux enroulements primaires T1 et T1' en série et un enroulement secondaire T2. Trois interrupteurs T77, T72 et T71 sont respectivement reliés à une extrémité distale du primaire T1, à un point commun de liaison des primaires T1 et T1', et à une extrémité distale du secondaire T1'. L'interrupteur T77 est par ailleurs relié à une borne B et les interrupteurs T72 et T71 sont tous deux reliés à une borne A. Les bornes A et B sont dans cet exemple respectivement reliées à un fil de phase de la source HT (qui inclut généralement 3 phases et un neutre) et à un autre fil de phase ou au neutre. En outre, le dispositif de liaison comprend dans cet exemple deux interrupteurs T75 et T76 placés respectivement entre une sortie du circuit d'émission et une borne du secondaire T2. Lors d'une phase d'émission, le secondaire T2 est utilisé comme antenne d'émission.

Lors d'une phase de récupération d'énergie sans émission de données, l'interrupteur T71 est ouvert, le primaire T1, et la tension d'entrée sont telles que le noyau magnétique interne du transformateur n'est pas saturé. Le transformateur a un très bon rendement de transfert.

Lors d'une phase de récupération d'énergie avec émission de données, l'interrupteur T71 est fermé et l'interrupteur T72 est ouvert. Le signal alternatif aux bornes du primaire « grossi » T1 + T1' engendre un phénomène de saturation du noyau magnétique lors des périodes d'amplitude maximale du signal alternatif, « périodes crêtes ». Le rendement de transfert du transformateur est alors un peu moins bon pendant ces périodes crêtes, mais il est alors possible d'émettre un champ magnétique vers l'extérieur du transformateur. En prenant une fréquence d'émission bien supérieure à la fréquence de fonctionnement du convertisseur, le circuit d'émission peut émettre son signal de données pendant ces périodes crêtes du signal alternatif provenant de la source HT.

On notera que dans tous les exemples précédemment illustrés, les convertisseurs comprennent un nombre d'interrupteurs reliés aux éléments inductifs qui est plus grand que le nombre d'interrupteurs réellement nécessaire pour réaliser la fonction de conversion souhaitée, en Flyback, Boost et Buck. Ces interrupteurs « supplémentaires » permettent de pouvoir isoler plus efficacement du reste du système (source SE, condensateur...) les éléments inductifs qui participent à la réalisation de l'antenne d'émission, afin de permettre de réaliser en pratique une meilleure antenne. L'homme de l'art pourra pour certaines applications envisager de ne pas mettre un interrupteur relié à chaque borne d'élément inductif constitutif de l'antenne, si la connexion de cette borne n'est pas gênante pour la réalisation de l'antenne.

En outre, les interrupteurs utilisés dans tous les systèmes décrits précédemment peuvent être réalisés au moyen de transistors ou relais. Les diodes peuvent éventuellement correspondre à la diode naturelle présente dans le substrat d'un transistor de puissance.

L'homme de l'art pourra aisément adapter la présente invention à d'autres types de source d'énergie. La source d'énergie utilisée pourra être entièrement dédiée au système électronique autonome, notamment quand la source d'énergie délivre de faible quantité d'énergie (cas de la biopile). Alternativement, la source d'énergie peut ne pas être dédiée au système électronique autonome selon l'invention mais plutôt dédié à un autre usage (cas de la source de tension haute-tension HT) et dans ce cas le prélèvement d'énergie est le plus faible possible pour être «non intrusif » et le moins perturbateur possible, et vise à récupérer uniquement l'énergie nécessaire à la réalisation d'une fonction de traitement avec un intervalle de temps entre deux réalisations. L'intervalle de temps entre les traitements sera dans le premier cas (faible source d'énergie) plus souvent variable et fonction de la source d'énergie, et dans le second cas plus souvent à intervalles de temps prédéfinis en fonction de l'application.

Selon d'autres modes de réalisation de l'invention, le moyen de stockage de l'énergie est un supercondensateur ou un accumulateur électrochimique.

En outre, le système électronique autonome pourrait inclure un circuit d'émission et de réception de données, comme cela est possible dans un système électronique autonome IOT. Pour ce faire, le circuit récepteur du système autonome doit « écouter » de temps à autre pour savoir si un message émis par un émetteur distant lui est destiné, en utilisant l'antenne pour recevoir un tel message.

De plus, dans tous les exemples précédemment décrits, le dispositif de liaison comprend des interrupteurs ((T25/T26) ; (T35/T36) ; (T43/T42) ; (T65/T66) ; (T75/T76)) placés entre le circuit d'émission E et l'antenne. Dans le cas où les sorties du circuit d'émission sont en haute impédance en dehors des phases d'émission (ou de réception le cas échéant), il est possible d'envisager un circuit de liaison sans de tels interrupteurs, par exemple uniquement avec des fils de liaisons ou encore un circuit de filtrage tel que des condensateurs (C61, C62 en figure 6).

En outre, les systèmes électroniques autonomes précédemment décrits sont en pratique réalisés sur une même carte électronique ou placés dans un même coffret. Le système comprend ainsi au moins deux bornes d'entrée destinées à recevoir des connexions électriques filaires reliées à une source d'énergie externe susceptible de fournir une tension et/ou un courant entre les deux bornes. En interne du système électronique autonome, les deux bornes d'entrée sont reliées au circuit convertisseur. On notera que tous les éléments du convertisseur, et notamment ses éléments inductifs, font partie du système électronique et sont reliés mécaniquement.

## Revendications

1. Système électronique autonome comprenant :
- deux bornes d'entrée aptes à recevoir des connexions électriques filaires reliées à une source d'énergie électrique externe (SE) ;
- un circuit convertisseur (Conv) relié aux deux bornes d'entrée pour recevoir l'énergie électrique de ladite source d'énergie électrique externe, le circuit convertisseur comprenant au moins un élément inductif (L) ;
- un moyen de stockage (S) de l'énergie délivrée par le circuit convertisseur ;
- un circuit électronique de traitement (T) réalisant une fonction prédéfinie quand l'énergie stockée dans ledit moyen de stockage est supérieure à une valeur prédéfinie, et délivrant un signal de données après réalisation de ladite fonction ;
- un circuit d'émission (E) relié à une antenne pour transmettre ledit signal de données à un récepteur distant (R) ; et
- un circuit de contrôle (Ctrl) apte à commander lesdits circuits; dans lequel l'ensemble des circuits est alimenté à partir de ladite source d'énergie électrique externe et dans lequel la puissance moyenne prélevée sur la source d'énergie électrique externe est inférieure à la puissance moyenne nécessaire aux circuits électriques de traitement et d'émission pour la réalisation de ladite fonction et l'envoi des données correspondantes ;
**caractérisé en ce que** ledit convertisseur et l'antenne comprennent au moins un élément inductif commun, et **en ce que** le système comprend un dispositif de liaison placé entre le circuit d'émission et ledit au moins un élément inductif commun pour permettre le transfert du signal à émettre par l'antenne constituée en tout ou partie par ledit au moins un élément inductif commun.

2. Système électronique autonome selon la revendication 1, comprenant en outre un dispositif d'interruption du fonctionnement du circuit convertisseur ((T21, T22, T23, T24) ; (T33, T34) ; (T44, T45)) permettant d'isoler ledit au moins un élément inductif commun et de le dédier uniquement à la réalisation d'une antenne, et dans lequel le circuit de contrôle est apte à commander le dispositif d'interruption et le dispositif de liaison pour configurer l'élément inductif commun respectivement en antenne ou en inductance pour le circuit convertisseur.

3. Système électronique autonome selon la revendication 1, dans lequel le circuit convertisseur inclut un transformateur comprenant un enroulement primaire et un enroulement secondaire, tout ou partie des enroulements primaire et secondaire constituant ladite antenne.

4. Système électronique autonome selon la revendication 1, recevant de ladite source d'énergie électrique une tension sensiblement continue et dans lequel le circuit convertisseur est de type élévateur ou abaisseur et comprend une bobine (L3 ; L4) ainsi qu'au moins un interrupteur (T32 ; T44) commandé pour être alternativement passant ou non-passant selon une fréquence de hachage, et dans lequel ladite bobine est utilisée en tout ou partie comme antenne d'émission.

5. Système électronique autonome selon la revendication 3, recevant de ladite source d'énergie électrique une tension sensiblement continue et dans lequel le circuit convertisseur est de type flyback et comprend au moins un interrupteur de commande ((T21/T22) ; (T61/T63)) relié à l'enroulement primaire du transformateur, l'interrupteur de commande étant commandé pour être alternativement passant ou non-passant selon une fréquence de hachage.

6. Système électronique autonome selon la revendication 3, recevant de ladite source d'énergie électrique une tension alternative qui est appliquée sur l'enroulement primaire du transformateur.

7. Système électronique autonome selon la revendication 1, dans lequel le dispositif de liaison comprend deux interrupteurs ((T25, T26) ; (T35, T36) ; (T42, T43) ; (T65, T66) ; (T75, T76)) placés chacun entre une sortie du circuit d'émission et un point de connexion dudit au moins un élément inductif commun.

8. Système électronique autonome selon la revendication 1, dans lequel le circuit convertisseur et le circuit d'émission peuvent fonctionner en même temps, et dans lequel la fréquence du signal d'émission est sensiblement différente de la fréquence interne de fonctionnement dudit circuit convertisseur.

9. Système électronique autonome selon la revendication 3, dans lequel ledit transformateur est un transformateur à air.

10. Système électronique autonome selon la revendication 1, dans lequel ledit au moins un élément inductif du circuit convertisseur comprend un noyau magnétique, et dans lequel lors de l'utilisation dudit au moins un élément inductif commun comme antenne, le noyau magnétique est saturé par un dispositif de saturation.
